# EUROPEAN PATENT SPECIFICATION

(11) **EP 3 511 675 B1**
(45) Date of publication and mention of the grant of the patent: **20.10.2021**
(21) Application number: 17848967.0
(22) Date of filing: 06.07.2017
(51) Int. Cl.: G01B 17/02, G01N 29/265, C21B 7/10, C21B 7/24, F27B 1/28, F27D 19/00

(54) **DEVICE FOR MEASURING THICKNESS OF A STAVE OF A BLAST FURNACE**
VORRICHTUNG ZUR DICKENMESSUNG EINES PLATTENKÜHLERS EINES HOCHOFENS
DISPOSITIF DE MESURE D'ÉPAISSEUR D'UNE DOUVE D'UN HAUT FOURNEAU

(30) Priority: 06.09.2016 KR 20160114508
(43) Date of publication of application: 17.07.2019
(73) Proprietor: Posco, Pohang-si, Gyeongsangbuk-do 37859 (KR)
(72) Inventor: CHOI, Sang-Woo, Pohang-si Gyeongsangbuk-do 37877 (KR); YOO, Byeong-Soo, Pohang-si Gyeongsangbuk-do 37877 (KR); KIM, Kwan-Tae, Pohang-si Gyeongsangbuk-do 37877 (KR); SHIN, Nam-Ho, Pohang-si Gyeongsangbuk-do 37877 (KR); JANG, Soo-Ho, Pohang-si Gyeongsangbuk-do 37877 (KR)
(74) Representative: Zech, Stefan Markus
(86) International application number: PCT/KR2017/007261
(87) International publication number: WO 2018/048083

(56) References cited:
- JP-A- 2010 271 072
- JP-Y2- H0 756 536
- KR-A- 20080 077 485
- KR-A- 20120 067 786
- KR-B1- 101 345 082
- KR-B1- 101 482 470
- KR-B1- 101 594 719
- KR-Y1- 200 241 665

## Description

### [Technical Field]

The present disclosure relates to a device for measuring a residual thickness of a stave, which is installed inside a steel shell of a blast furnace and serves as a cooling unit.

### [Background Art]

In the iron and steel industry, a blast furnace is a facility in which iron ore, as a main raw material, and coal, as fuel, are charged in the form of sintered ore and coke and iron oxide is produced as pig iron in a melting state, for example, into molten iron, through a reduction reaction.

Such a blast furnace includes a cooling unit disposed inside a steel shell, an outer wall of the blast furnace, to protect a furnace body from descending fuel and raw materials or hot air of high heat and reaction heat. As such a cooling unit, a stave is used.

However, there has been a problem in which abrasion of a stave has been accelerated at a high productivity, and damage to a cooling water pipe inside the stave may occur, which has caused cooling water to flow into a blast furnace, lowering a temperature thereof.

To prevent the occurrence of such a problem, a measure has been sought to measure a thickness of a stave and extract the degree of wear to improve the productivity and performance of a blast furnace to prevent cooling water from flowing out into a blast furnace.

KR 10 1594719B1 describes an apparatus and a method to measure a stave thickness. The apparatus in KR 10 1594719B1 comprises an ultrasonic wave sensor part and a driving unit, the driving unit causes the ultrasonic sensor unit to move along a cooling water flow path.

Another technique for measuring the thickness of a stave in a blast furnace is disclosed in Korean Patent Laid-Open Publication No. 2012-0065119 filed by the present applicant, entitled "Apparatus for measuring stave's thickness of furnace and method of measuring stave's thickness using the same". This technique discloses that, to monitor abrasion of a stave in a thickness direction on-line, a sensor part is mounted in a cooling water pipe of a stave, which is used to measure a residual thickness of the stave in real time.

However, in the above-described technique, in a case in which a groove is disposed in a front surface of a stave at an intersection of a water supply and drain pipe and a cooling water pipe of the stave, since ultrasonic waves of a sensor part receive a signal that arrives first, a thin thickness of a groove, not an entire thickness, may be measured. In this case, there may be a problem in which a residual thickness of interest is not provided, and a measurement value much thinner than an actual residual thickness is provided.

### [Disclosure]

### [Technical Problem]

An aspect of the present invention is to provide a device for measuring stave thickness, in which a stave thickness may be measured at least partially by moving a sensor part.

### [Technical Solution]

According to an aspect of the present invention, a device for measuring thickness of a stave of a blast furnace includes a main body through which an operation rod penetrates; a link part connecting one end of the operation rod and the main body to each other; and a sensor part for sending ultrasonic waves to the stave to measure a thickness of the stave and receiving reflected ultrasonic waves installed on one side of the link part to move by rotation of the link part in a direction substantially perpendicular to an insertion direction of the operation rod, when the operation rod moves linearly with respect to the main body.

### [Advantageous Effects]

As described above, according to an exemplary embodiment of the present invention, a thickness of a stave in a protruding part thereof may be measured while moving a position of a sensor part, thereby measuring a remaining thickness of a stave from the beginning of wear without restriction.

In detail, according to an exemplary embodiment of the present invention, the limitation of a concavo-convex structure of a front surface of a stave is eliminated, and a substantial remaining thickness of a stave may be measured. Thus, the degree of wear of a stave may be reliably measured, thereby significantly increasing the performance and lifetime of a blast furnace.

### [Description of Drawings]

FIG. 1 is a schematic cross-sectional view illustrating a device for measuring stave thickness according to a first embodiment of the present invention.
FIG. 2 is a schematic cross-sectional view illustrating an operating state of the device for measuring stave thickness, illustrated in FIG. 1.
FIGS. 3 and 4 are cross-sectional views illustrating a use state in which the device for measuring stave thickness according to the first embodiment of the present invention is applied to a blast furnace.
FIG. 5 is a schematic cross-sectional view illustrating a device for measuring stave thickness according to a second embodiment of the present invention.
FIG. 6 is a schematic cross-sectional view illustrating an operating state of the device for measuring stave thickness, illustrated in FIG. 5.
FIG. 7 is a schematic cross-sectional view illustrating a modified example of the device for measuring stave thickness according to the second embodiment of the present invention, and is a view illustrating an operating state thereof.
FIG. 8 is a cross-sectional view illustrating a use state in which a modified example of the device for measuring stave thickness according to the second embodiment of the present invention is applied to a blast furnace.
FIG. 9 is a schematic cross-sectional view illustrating a device for measuring stave thickness according to a third embodiment of the present invention.

### [Best Mode]

Hereinafter, exemplary embodiments of the present invention will be described in detail with reference to the accompanying drawings. In adding reference numerals to constituent elements of the drawings, the same constituent elements are denoted by the same reference numerals even though they are illustrated in different drawings. In the following description of the present invention, a detailed description of known functions and configurations incorporated herein will be omitted when it may make the subject matter of the present invention rather unclear.

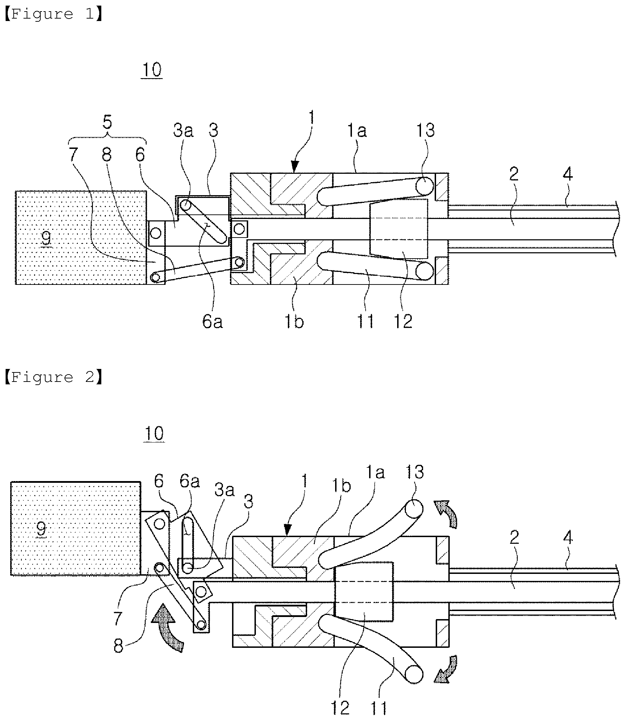

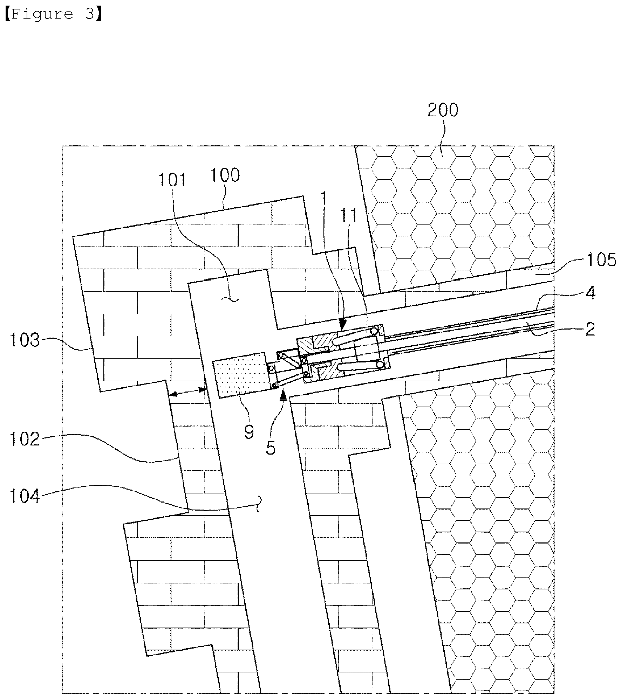

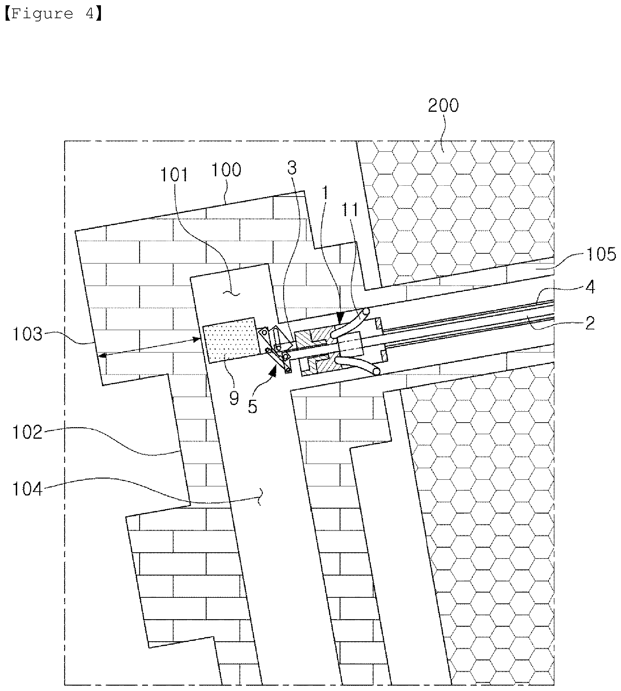

FIG. 1 is a schematic cross-sectional view illustrating a device for measuring stave thickness according to a first embodiment of the present invention. FIG. 2 is a schematic cross-sectional view illustrating an operating state of the device for measuring stave thickness, illustrated in FIG. 1. FIGS. 3 and 4 are cross-sectional views illustrating a use state in which the device for measuring stave thickness according to the first embodiment of the present invention is applied to a blast furnace.

A blast furnace is a facility in which iron ore as a main raw material, and coal as fuel, are charged in the form of sintered ore and coke and iron oxide is produced into pig iron in a melting state, for example, into molten iron, through reduction reaction. The blast furnace includes a stave 100 to protect a furnace body from descending fuel and raw materials or hot air of high heat and reaction heat.

The stave 100 may be a component for cooling and protecting a furnace body of a blast furnace, and the blast furnace may be provided with a plurality of staves. The stave may be formed of a wide panel, installed in parallel with a steel shell 200 of the blast furnace, and may have a cooling water pipe 104 provided in the interior thereof. A groove 102 may be formed in a side surface of the stave, facing an inner side of the blast furnace, such that a protruding part 103 may be formed.

The cooling water pipe 104 is a passage through which cooling water flows, and the furnace body may be protected from hot air of high heat and reaction heat, by the cooling water. A device for measuring a stave thickness to be described later may be installed in the inside of the cooling water pipe, such that a thickness of the stave 100 may be measured.

The cooling water pipe 104 may be provided as a plurality of cooling water pipes in a single stave 100, and may communicate with a water supply pipe (not shown) and a drain pipe 105, through which cooling water may flow in and out. The water supply pipe and the drain pipe extend to the outside of the steel shell 200 of the blast furnace to receive external cooling water or discharge the cooling water externally.

Upper and lower ends of the cooling water pipe 104 may be formed to have a substantially T shape together with the water supply pipe or the drain pipe 105. A predetermined space 101 may be formed between one end of the cooling water pipe and the water supply pipe or between the other end of the cooling water pipe and the drain pipe.

A device for measuring a stave thickness according to an exemplary embodiment may be disposed in the predetermined space 101. In this case, a thickness of the stave 100 measured by the device for measuring a stave thickness disposed in the space 101 is a thickness of a wall on which abrasion occurs when the blast furnace is operating, and is a wall thickness in a direction from an inner wall of the cooling water pipe 104 to an inner side of the blast furnace. The device may be configured to preferentially measure a thickness of a portion of the protruding part 103 on which abrasion first proceeds, prior to that on a portion of the groove 102.

A refractory (not shown) may be disposed on the interior and exterior of the stave 100. The refractory is a material resistant to high temperature of the blast furnace, and may sufficiently maintain the strength of the stave without being softened at a high temperature and may withstand a chemical action.

A device 10 for measuring a stave thickness according to a first embodiment of the present invention may include a main body 1 through which an operation rod 2 passes; a link part 5 connecting one end of the operation rod and the main body; and a sensor part 9 provided on one side of the link part to move by rotation of the link part.

The main body 1 is a substantially tubular member, and in detail, the main body 1 may be configured as a pair of halves coupled to each other, in which other components may be coupled to each other.

The operation rod 2 passes through the inside of the main body 1 in a longitudinal direction. A support part 3 may be mounted on one end of the main body, and may be extended from an end surface or a side wall of the main body to be integrated therewith, or may be separately manufactured and attached to the main body. Although only one support part is illustrated in the drawing, a pair of support parts may also be provided on an end surface or a side wall of the main body to face each other depending on conditions.

A connection pipe 4 may be connected to the other end of the main body 1, and the connection pipe extends outwardly of the water supply pipe or the drain pipe 105, to have a length that may be exposed externally.

The operation rod 2 is a substantially tubular or rod-shaped member, and one end thereof is connected to the link part 5, and the operation rod penetrates through the connection pipe 4, in such a manner that the other end thereof extends and is exposed to the outside of the connection pipe. A signal cable (not shown) for the sensor part 9 may be embedded in the operation rod. Thus, when an operator pushes the other end of the operation rod toward the inside of the connection pipe, one end of the operation rod protrudes from the main body 1 to rotate the link part.

On the other hand, since the operation rod 2 is moved in a longitudinal direction of the main body from a center of the main body 1, and the support part 3 is provided at an end surface or a side wall of the main body in a position deviated from the center of the main body to be offset, the operation rod and the support part do not interfere with each other.

At least one cutout groove 1a may be formed in a side surface of the main body 1 for unfolding of a support leg 11 to be described later. Further, a step portion 1b may be formed on an inner wall of the main body to reduce an inner space of the main body while the operation rod 2 penetrates therethrough.

The operation rod 2 may be provided with an expansion block 12 for unfolding of the support leg 11 to be described later. The expansion block is fixed to a portion of the operation rod located in the main body 1, to move together with movement of the operation rod in the main body, while the movement of the expansion block is stopped by the step portion 1b in the main body.

The link part 5 includes a first link 6 having one end rotatably connected to one end of the operation rod, and having an elongated hole 6a inclined with respect to the longitudinal direction thereof, the first link 6 being connected to the main body 1, in detail, to the support part 3 via a connecting pin 3a inserted into the elongated hole; and a second link 7 having one end connected to the other end of the first link, and provided with the sensor part 9 mounted thereon.

In addition, the link part may further include a third link 8 connecting the other end of the second link 7 to one end of the operation rod 2 to each other, such that a sensing surface of the sensor part 9 has a constant orientation.

In the case of the link part 5 configured as described above, as the connecting pin 3a of the support part 3 moves along the elongated hole 6a of the first link 6 when the operation rod 2 linearly moves, the entirety of the first link is rotated about the connecting pin, and thus, the second link 7 and the sensor part 9 mounted thereon may move in parallel, in a direction substantially perpendicular to an insertion direction of the operation rod 2.

The sensor part 9 may include a piezoelectric body that transmits ultrasonic waves to the stave 100 and receives ultrasonic waves reflected and returned. The thickness of the stave may be measured by a speed of the ultrasonic waves transmitted and received and the time taken to receive the ultrasonic waves.

A surface of the sensor part 9 may be formed as a curved surface having the same radius of curvature as that of an inner surface of the cylindrical cooling water pipe 104, which is to significantly increase sensing efficiency by significantly increasing a sensing area of the sensor part.

Although not shown in the drawings, a signal cable passing through the operation rod 2 may be connected to the sensor part 9. The signal cable may be drawn out along the water supply pipe or the drain pipe 105 and finally connected to an operation unit (not shown) . Signals transmitted and received by the sensor part 9 are transmitted to an external operation unit, and the operation unit may calculate the thickness of the stave 100 using detection values of the sensor part.

Actually, there is a stave structure in which the sensor part 9 comes into contact with a portion of the protruding part 103 of the stave 100 or comes into contact with a portion of the groove 102 when the device for measuring stave thickness is pushed into the drain pipe 105 or the water supply pipe. Since the stave is first worn out from the protruding part, the thickness of the groove portion is hardly changed until the protruding part becomes worn and have the same thickness as that of the groove portion. Therefore, the measurement of a remaining thickness of the stave for evaluating wear of the stave should be performed by measuring a thickness of a portion of the protruding part.

If a groove is included in a region (area) in which the sensor part transmits and receives a signal even in a case in which a center portion of the sensor part 9 is slightly shifted from a portion of the groove 102, a signal reflected from an end surface of the groove is received first, and thus, there may be a problem in which a relatively thin thickness is measured. If such a problem occurs in either the drain pipe 105 or the water supply pipe, meaningful remaining thickness may not be measured until the wear progresses seriously. In addition, even if the structure corresponding to a portion of the protruding part 103 is selected, in a case in which upper wear and lower wear of the upper and lower portions are different from each other due to uneven wear at the top and bottom of the stave 100, there may be an error in which a measured value of a remaining thickness of the stave is measured to be less severe than a degree of actual wear.

In the device for measuring stave thickness according to an exemplary embodiment of the present invention, since the sensor part 9 may be moved in parallel by the link part 5 in a direction substantially perpendicular to an insertion direction of the operation rod 2, the sensor part may ascend upwardly or descend downwardly in the stave 100 as illustrated in FIG. 4. Thus, the sensor part is brought into adjacent contact with a portion of the protruding part 103, to easily measure a remaining thickness up to a surface on which the wear is proceeding.

In addition, the device 10 for measuring stave thickness according to the first embodiment of the present invention may include at least one support leg 11 installed on the main body 1 and capable of being unfolded laterally of the main body.

The water supply pipe or the drain pipe 105 of the stave 100 may not be a straight pipe, but may be curved in the middle thereof. In addition, a ball valve or the like may be mounted on the water supply pipe or the drain pipe for maintenance, and thus, a thickness (or width) of the sensor part 9 inserted into the water supply pipe or the drain pipe should be much smaller than an inner diameter of the pipe.

Since the thickness of the sensor part 9 is much smaller than the inner diameter of the pipe as described above, the sensor part may easily shake and move during measurement in the water supply pipe or the drain pipe 105, and thus, it may be difficult for the sensor part to contact at an appropriate position of the cooling water pipe 104.

To prevent the occurrence of this problem, the device for measuring stave thickness according to an exemplary embodiment may include a support leg for positioning the sensor part at a predetermined position on an inner wall of the pipe. In the case of the support leg, when the sensor part is pushed into the water supply pipe or the drain pipe or is pulled out from the water supply pipe or the drain pipe after measurement to be drawn out, the support leg may be folded to pass through the pipe without interference with respect to an inner diameter portion of the pipe, and may be unfolded during measurement to support the main body or the like and contact an inner diameter portion of the pipe in such a manner that the sensor part does not move at a predetermined and appropriate position.

In the first embodiment of the present invention, one end of the support leg 11 is fixed to the step portion 1b of the main body 1, and the other end thereof extends toward the expansion block 12 of the operation rod 2. A rotating member 13 such as a ball, a roller or the like is provided on the other end of the support leg to prevent the inner diameter portion of the pipe or the other end of the support leg from being worn when the support leg contacts the inner diameter portion of the pipe. The support leg may be formed of a material having elasticity, such as a metal, plastic or the like, to be bent and deformed.

When the operation rod 2 is moved to protrude from the main body 1 to move the sensor part 9, the expansion block 12 fixed to the operation rod is inserted into a gap between the support leg 11 and the operation rod 2, such that the support leg is bent to allow the other end side to be opened, and thus, the support leg is exposed to the outside of the main body through the cutout groove 1a of the main body and is unfolded simultaneously therewith.

When the operation rod 2 is moved to the opposite side, the expansion block 12 fixed to the operation rod is released from the gap between the support leg 11 and the operation rod 2 and the other end side of the support leg is pinched such that the support leg may be inserted into the main body.

In another modified example, one end of the support leg 11 is rotatably connected to the step portion 1b of the main body through a rotation shaft (not shown), and the other end thereof extends toward the expansion block 12 of the operation rod 2. This support leg is formed of a material such as a metal, and the expansion block may be formed of a magnetic material.

When the operation rod 2 is moved to protrude from the main body 1 to move the sensor part 9, the expansion block 12 fixed to the operation rod is inserted into a gap between the support leg 11 and the operation rod 2, and the support leg is thus rotated such that the other end side thereof is opened. Thus, the support leg is unfolded simultaneously with being exposed to the outside of the main body through the cutout groove 1a of the main body.

When the operation rod 2 is moved to the opposite side, the expansion block 12 fixed to the operation rod pulls the support leg 11 by magnetic force to be removed from the gap between the support leg and the operation rod, and the other end side of the support leg is pinched by magnetic force such that the support leg may be inserted into the main body.

In another modified example, one end of the support leg 11 is rotatably connected to the step portion 1b of the main body via a rotation shaft (not shown), and the other end thereof extends toward the expansion block 12 of the operation rod 2 to be connected to the main body 1 or the connection pipe 4 by an elastic member (not shown) such as a spring or the like. As a result, when the expansion block fixed to the operation rod, is removed from the gap between the unfolded support leg and the operation rod, the other end side of the support leg is pinched by elastic force of the elastic member such that the support leg may be inserted into the main body.

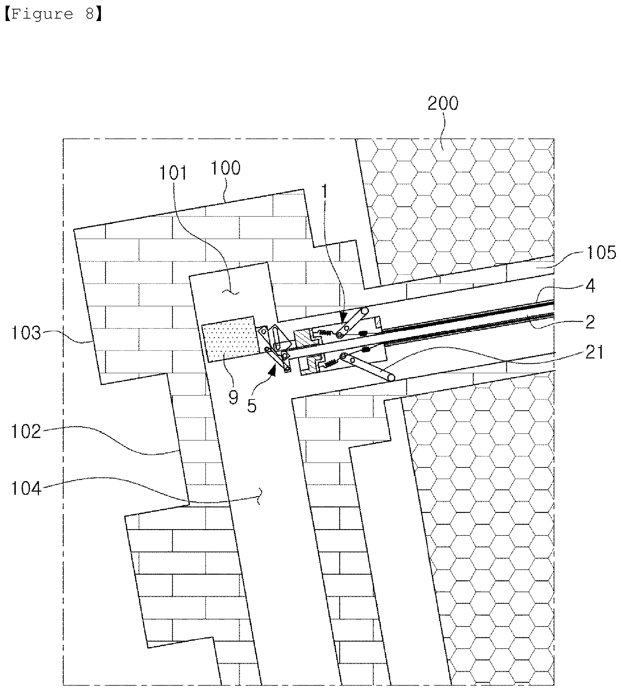

Further, when at least one pair of support legs 11 is provided, one support leg may be formed to be longer than the other support leg (see FIG. 8). In this case, the support leg formed relatively longer is stronger to support the main body 1, to move the sensor part 9 to the opposite side of the longer support leg.

Thus, by moving the sensor part 9 to the opposite side of the longer support leg 11, a parallel movement distance of the sensor part may be increased, and the sensor part may thus be moved closer to a portion of the protruding part 103. Alternatively, when the longer support leg is disposed on a side of the main body 1, the sensor part may also be moved to be offset toward the left or right.

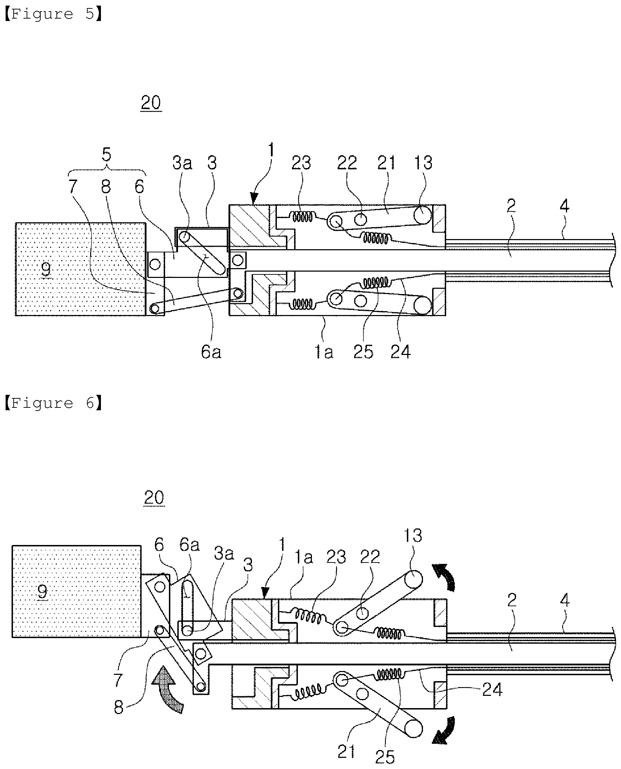

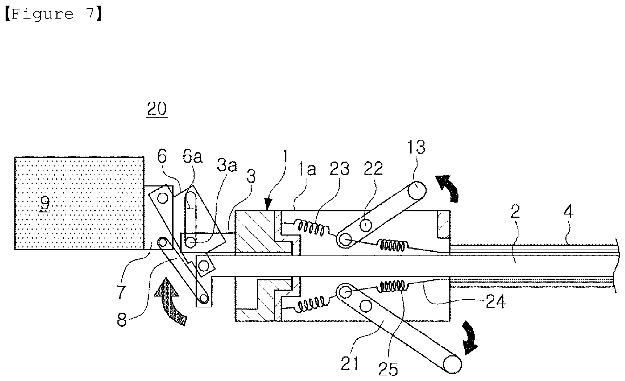

FIG. 5 is a schematic cross-sectional view illustrating a device for measuring stave thickness according to a second embodiment of the present invention. FIG. 6 is a schematic cross-sectional view illustrating an operating state of the device for measuring stave thickness illustrated in FIG. 5. FIG. 7 is a schematic cross-sectional view illustrating a modified example of the device for measuring stave thickness according to the second embodiment of the present invention, and is a view illustrating an operating state thereof. FIG. 8 is a cross-sectional view illustrating a use state in which a modified example of the device for measuring stave thickness according to the second embodiment of the present invention is applied to a blast furnace.

In the second embodiment of the present invention, except for a support leg 21, the remaining components are the same as those of the first embodiment described above. In describing a device 20 for measuring stave thickness according to the second embodiment, the same components as those of the device 10 for measuring stave thickness according to the first embodiment are denoted by the same reference numerals, and a detailed description of the configuration and the function thereof will be omitted.

In the second embodiment of the present invention, the support leg 21 is configured in such a manner that an intermediate portion thereof is rotatably installed on a main body 1 by a rotation pin 22, one end thereof is connected to the main body via a spring 23, one end of a wire 24 is connected to the one end of the support leg, and the wire passes through a gap between a operation rod 2 and a connection pipe 4 such that the other end thereof extends and is exposed outside of a connection pipe. A rotating member 13 such as a ball, a roller or the like may be installed on the other end of the support leg. This support leg may be formed of a material such as a metal, plastic or the like.

Separately from the movement of a sensor part 9, when an operator pulls the other end of the wire 24 exposed outwardly of a connection pipe 4, the wire pulls one end of the support leg 21 inwardly of the main body 1, such that the other end side of the support leg is opened while the support leg is rotated with respect to the main body about a rotation pin 22, and thus, the support leg is unfolded simultaneously with being exposed to the outside of the main body through a cutout groove 1a of the main body.

Alternatively, an auxiliary spring 25 may be interposed between one end of the support leg 21 and one end of the wire 24, which is to provide a clearance, since in a case in which an inner diameter portion of the pipe is less than an unfolded width of the support leg or there is present an obstacle in the inner diameter portion of the pipe, the support leg may be rotated in the opposite direction due to deformation characteristics of the auxiliary spring.

When the wire 24 is released loosely, the support leg is rotated in the opposite direction to the main body 1 about the rotation pin 22 by elastic force of restoring the spring 23 connected to one end of the support leg 21, and the other end side of the support leg is pinched such that the support leg is inserted into the main body.

Further, in the case of providing at least one pair of support legs 21, one support leg may be formed to be longer than the other support leg as illustrated in FIGS. 7 and 8. In this case, the longer-formed support leg is stronger to support the main body 1, to move the sensor part 9 to the opposite side of the longer-formed support leg.

Thus, as the longer-formed support leg 21 moves the sensor part 9 to the opposite side thereof such that a parallel movement distance of the sensor part may increase, the sensor part may be moved closer to a portion of a protruding part 103. Alternatively, when the longer-formed support leg is disposed on a side of the main body 1, the sensor part may be moved to be offset toward the left or right.

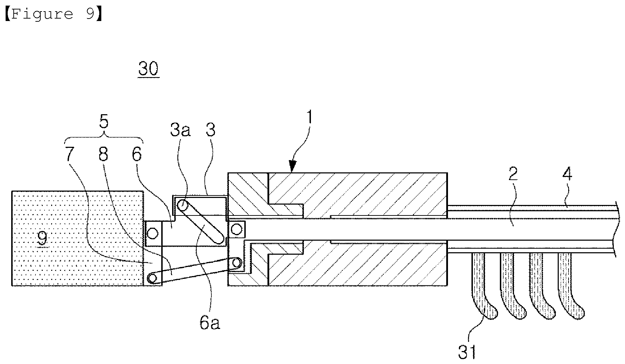

FIG. 9 is a schematic cross-sectional view illustrating a device for measuring stave thickness according to a third embodiment of the present invention.

In the third embodiment of the present invention, except for a support leg 31, the remaining components are the same as those of the first and second embodiments described above. In describing a device 30 for measuring stave thickness according to the third embodiment, the same components as those of the devices 10 and 20 for measuring stave thickness according to the first and second embodiments are denoted by the same reference numerals, and detailed description of the components and functions thereof will be omitted.

In the third embodiment of the present invention, one end of the support leg 31 is fixed to a connection pipe 4 or a main body 1, and the other end thereof extends toward a side of the connection pipe. The support leg may be formed to have the form of a metal coil, a plastic brush, or a pad formed of silicone or the like.

In a manner different from the first and second embodiments, when the support leg 31 having elasticity is attached to one side of the connection pipe 4 connected to the main body 1 or to the main body, the support leg may be in contact with an inner diameter portion of the pipe to support the main body or the like, such that the sensor part 9 may be prevented from moving in a predetermined and appropriate position, even without a separate operation. In addition, when passing through a narrow inner diameter region of the pipe, the support leg having elasticity may be deformed to smoothly pass through the narrow space. When the support leg reaches a larger region of the inner diameter portion, the shape thereof may be restored by elastic force to support the main body and the sensor part.

The device for measuring stave thickness according to the exemplary embodiment configured as described above is inserted into a drain pipe 105 or a water supply pipe such that the sensor part 9 may be in contact with an inner surface of a cooling water pipe 104, corresponding to a portion of the protruding part 103 or a portion of a groove 102 of a stave 100.

The sensor part 9 of the device for measuring stave thickness sends ultrasonic waves to measure a thickness of the stave 100 from the inner wall of the cooling water pipe 104, and receives reflected ultrasonic waves. The thickness of the stave is calculated and measured using a speed of the transmitted and received ultrasonic waves and a time difference between the transmitted and received ultrasonic waves.

When the thickness of a portion of the groove 102 is measured, since a thickness from the inner wall of the cooling water pipe 104 to the groove of the stave is already known from a design value of the stave 100, it can be determined that the thickness of the portion of the groove has been measured by comparing the measurement value and the design value.

When the operation rod 2 is moved to protrude from the main body 1 to move the sensor part 9, as a connecting pin 3a of a support part 3 is moved along an elongated hole 6a of a first link 6, the entirety of the first link is rotated about the connecting pin, and thus, a second link 7 and the sensor part mounted thereon are moved in parallel, in a direction substantially perpendicular to an inserting direction of the operation rod.

Thus, as the sensor part 9 is in adjacently contact with a portion of the protruding part 103, a remaining thickness from a relevant portion to a surface on which wear is proceeding may be easily measured.

A signal transmitted and received by the sensor part 9 is transmitted to an external operation unit, and a thickness of the stave 100 may be calculated using a detection value of the sensor part.

By using the device for measuring stave thickness according to an exemplary embodiment of the present invention including the link part 5 for moving the sensor part 9, the thickness may be measured at at least two points, and the thickness of the protruding part in which abrasion is in progress may be easily measured by avoiding a groove formed in at least a front surface of the stave. In addition, since the thickness may be measured at at least two points, a gradient of the thickness may be confirmed.

As described above, according to an exemplary embodiment, since a dedicated sensor is pushed into a water supply and drain pipe and contacted with a wall surface of a cooling water pipe to easily measure a remaining thickness of a stave and to measure a meaningful remaining thickness of a protruding part by avoiding a groove portion in a region at which a water supply and drain pipe and the cooling water pipe intersect. Thus, the degree of wear of the stave may be reliably measured, thereby significantly increasing performance and lifetime of a blast furnace.

The foregoing description is merely illustrative of the technical idea of the present invention, and various changes and modifications may be made by those skilled in the art without departing from the essential characteristics of the present invention. Therefore, the embodiments disclosed in the present disclosure are intended to illustrate rather than limit the scope of the present invention, and the scope of the technical idea of the present invention is not limited by these embodiments. The scope of protection of the present invention is defined by the following claims.

### [Industrial Applicability]

As described above, the present invention is useful for measuring the remaining thickness of a stave which is a cooling unit, for example, in a blast furnace of a steel industry.

## Claims

1. A device (10) for measuring thickness of a stave (100) of a blast furnace, comprising:
a main body (1) through which an operation rod (2) penetrates;
a link part (5) connecting one end of the operation rod (2) and the main body (1) to each other; and
a sensor part (9), for sending ultrasonic waves to the stave to measure a thickness of the stave and receiving reflected ultrasonic waves, installed on one side of the link part (5) and adapted to move by rotation of the link part in a direction substantially perpendicular to an insertion direction of the operation rod (2), when the operation rod (2) moves linearly with respect to the main body (1).

2. The device (10) for measuring stave (100) thickness of claim 1, wherein the other end of the main body (1) is connected to a connection pipe (4), and the operation rod (2) penetrates through the connection pipe (4) in such a manner that the other end of the operation rod (2) extends outwardly of the connection pipe (4).

3. The device (10) for measuring stave thickness of claim 1, wherein the link part (5) comprises:
a first link (6) having one end rotatably connected to the one end of the operation rod (2), and having an elongated hole (6a) inclined with respect to a longitudinal direction, the first link (6) being connected to the main body (1) via a connecting pin (3a) inserted into the elongated hole (6a); and
a second link (7) having one end connected to the other end of the first link (6), and provided with the sensor part (9) mounted thereon.

4. The device (10) for measuring stave thickness of claim 3, further comprising a third link (8) connecting the other end of the second link (7) and the one end of the operation rod (2) to each other.

5. The device (10) for measuring stave thickness of claim 1, wherein the main body (1) is provided with at least one support leg (11) installed thereon, the at least one support leg (11) being capable of being unfolded laterally of the main body (1).

6. The device (10) for measuring stave thickness of claim 5, wherein the main body (1) is provided with at least one cutout groove (1a) disposed in a side surface thereof, the at least one cutout groove (1a) allowing for unfolding of the support leg (11), and the operation rod (2) is provided with an expansion block (12) allowing for unfolding of the support leg (11), the expansion block (12) being fixed to the operation rod (2).

7. The device (10) for measuring stave thickness of claim 6, wherein one end of the support leg (11) is fixed to the main body (1), and the support leg (11) is formed of a material having elasticity to be flexibly deformed.

8. The device (10) for measuring stave thickness of claim 6, wherein one end of the support leg (11) is rotatably connected to the main body (1) through a rotation shaft, and the support leg (11) is formed of a metal and the expansion block (12) is formed of a magnetic material.

9. The device (10) for measuring stave thickness of claim 6, wherein one end of the support leg (11) is rotatably connected to the main body (1) through a rotation shaft, and the other end of the support leg (11) is connected to the main body (1) or the connection pipe (4) by an elastic member.

10. The device (10) for measuring stave thickness of claim 5, wherein the main body (1) is provided with at least one cutout groove (1a) disposed in a side surface thereof, the at least one cutout groove (1a) allowing for unfolding of the support leg (21), the support leg (21) has an intermediate portion rotatably installed on the main body (1) by a rotation pin (22), and has one end connected to the main body (1) via a spring (23), and the one end of the support leg (21) is connected to one end of a wire (24), and the wire passes through a gap between the operation rod (2) and the connection pipe (4) in such a manner that the other end thereof extends outwardly of the connection pipe (4).

11. The device (10) for measuring stave thickness of any one of claims 5 to 10, wherein the other end of the support leg (21) is provided with a rotating member (13) installed thereon.

12. The device (10) for measuring stave thickness of any one of claims 5 to 10, wherein when the support leg (21) is provided as at least one pair of support legs (21), one of the support legs (21) is longer than the other support leg (21).

13. The device (10) for measuring stave thickness of claim 2, wherein the connection pipe (4) or the main body (1) is provided with at least one support leg (31) extending in a lateral direction of the connection pipe (4) or the main body (1).

14. The device (10) for measuring stave thickness of claim 13, wherein the support leg (31) has one of a metal coil type, a plastic brush type, and a silicone pad type.

## Patentansprüche

1. Vorrichtung (10) zum Messen einer Dicke einer Daube (100) eines Hochofens, umfassend:
einen Hauptkörper (1), den eine Betriebsstange (2) durchdringt;
einen Verknüpfungsteil (5), der ein Ende der Betriebsstange (2) und den Hauptkörper (1) miteinander verbindet; und
einen Sensorteil (9) zum Senden von Ultraschallwellen zu der Daube, um eine Dicke der Daube zu messen, und zum Empfangen reflektierter Ultraschallwellen, der auf einer Seite des Verknüpfungsteils (5) installiert ist und dazu ausgelegt ist, sich durch Drehung des Verknüpfungsteils in eine Richtung zu bewegen,
die im Wesentlichen senkrecht zu einer Einführungsrichtung der Betriebsstange (2) ist, wenn sich die Betriebsstange (2) linear in Bezug auf den Hauptkörper (1) bewegt.

2. Vorrichtung (10) zum Messen der Dicke der Daube (100) nach Anspruch 1, wobei das andere Ende des Hauptkörpers (1) mit einem Verbindungsrohr (4) verbunden ist und die Betriebsstange (2) das Verbindungsrohr (4) auf eine solche Weise durchdringt, dass sich das andere Ende der Betriebsstange (2) über das Verbindungsrohr hinaus (4) erstreckt.

3. Vorrichtung (10) zum Messen der Dicke der Daube nach Anspruch 1, wobei das Verknüpfungsteil (5) Folgendes umfasst:
eine erste Verknüpfung (6) mit einem Ende, das drehbar mit dem einen Ende der Betriebsstange (2) verbunden ist, und mit einem länglichen Loch (6a), das in Bezug auf eine Längsrichtung geneigt ist, wobei die erste Verknüpfung (6) über einen Verbindungsstift (3a), der in das längliche Loch (6a) eingeführt ist, mit dem Hauptkörper (1) verbunden ist; und
eine zweite Verknüpfung (7) mit einem Ende, das mit dem anderen Ende der ersten Verknüpfung (6) verbunden ist und mit dem daran montierten Sensorteil (9) versehen ist.

4. Vorrichtung (10) zum Messen der Dicke der Daube nach Anspruch 3, ferner umfassend eine dritte Verknüpfung (8), welche das andere Ende der zweiten Verknüpfung (7) und das eine Ende der Betriebsstange (2) miteinander verbindet.

5. Vorrichtung (10) zum Messen der Dicke der Daube nach Anspruch 1, wobei der Hauptkörper (1) mit mindestens einem daran installierten Stützbein (11) versehen ist, wobei das mindestens eine Stützbein (11) dazu in der Lage ist, seitlich zum Hauptkörper (1) entfaltet zu werden.

6. Vorrichtung (10) zum Messen der Dicke der Daube nach Anspruch 5, wobei der Hauptkörper (1) mit mindestens einer ausgeschnittenen Nut (1a) versehen ist, die in einer Seitenfläche davon angeordnet ist, wobei die mindestens eine ausgeschnittene Nut (1a) das Entfalten des Stützbeins (11) ermöglicht, und die Betriebsstange (2) mit einem Ausdehnungsblock (12) versehen ist, der das Entfalten des Stützbeins (11) ermöglicht, wobei der Ausdehnungsblock (12) an der Betriebsstange (2) fixiert ist.

7. Vorrichtung (10) zum Messen der Dicke der Daube nach Anspruch 6, wobei ein Ende des Stützbeins (11) an dem Hauptkörper (1) fixiert ist und das Stützbein (11) aus einem elastischen Material gebildet ist, um flexibel verformt zu werden.

8. Vorrichtung (10) zum Messen der Dicke der daube nach Anspruch 6, wobei ein Ende des Stützbeins (11) drehbar mit dem Hauptkörper (1) durch eine Drehwelle verbunden ist und das Stützbein (11) aus einem Metall gebildet ist und der Ausdehnungsblock (12) aus einem magnetischen Material gebildet ist.

9. Vorrichtung (10) zum Messen der Dicke der Daube nach Anspruch 6, wobei ein Ende des Stützbeins (11) drehbar mit dem Hauptkörper (1) durch eine Drehwelle verbunden ist und das andere Ende des Stützbeins (11) mit dem Hauptkörper (1) oder dem Verbindungsrohr (4) durch ein elastisches Glied verbunden ist.

10. Vorrichtung (10) zum Messen der Dicke der Daube nach Anspruch 5,
wobei der Hauptkörper (1) mit mindestens einer ausgeschnittenen Nut (1a) versehen ist, die in einer Seitenfläche davon angeordnet ist, wobei die mindestens eine ausgeschnittene Nut (1a) das Entfalten des Stützbeins (21) ermöglicht,
wobei das Stützbein (21) einen Zwischenabschnitt aufweist, der drehbar an dem Hauptkörper (1) durch einen Drehbolzen (22) installiert ist, und ein Ende aufweist, das mit dem Hauptkörper (1) über eine Feder (23) verbunden ist, und
wobei das eine Ende des Stützbeins (21) mit einem Ende eines Drahts (24) verbunden ist und der Draht durch einen Spalt zwischen der Betriebsstange (2) und dem Verbindungsrohr (4) auf eine solche Weise verläuft, dass sich das andere Ende davon über das Verbindungsrohr hinaus (4) erstreckt.

11. Vorrichtung (10) zum Messen der Dicke der Daube nach einem der Ansprüche 5 bis 10, wobei das andere Ende des Stützbeins (21) mit einem daran installierten Drehglied (13) versehen ist.

12. Vorrichtung (10) zum Messen der Dicke der Daube nach einem der Ansprüche 5 bis 10, wobei, wenn das Stützbein (21) als mindestens ein Paar von Stützbeinen (21) bereitgestellt ist, eines der Stützbeine (21) länger als das andere Stützbein (21) ist.

13. Vorrichtung (10) zum Messen der Dicke der Daube nach Anspruch 2, wobei das Verbindungsrohr (4) oder der Hauptkörper (1) mit mindestens einem Stützbein (31) versehen ist, das sich in eine Seitenrichtung des Verbindungsrohrs (4) oder des Hauptkörpers (1) erstreckt.

14. Vorrichtung (10) zum Messen der Dicke der Daube nach Anspruch 13, wobei das Stützbein (31) einen von einem Metallspulentyp, einem Kunststoffbürstentyp und einem Silikonpadtyp aufweist.

## Revendications

1. Dispositif (10) de mesure d'épaisseur d'une douve (100) d'un haut-fourneau, comprenant :
un corps principal (1) à travers lequel pénètre une tige fonctionnelle (2) ;
une partie de liaison (5) raccordant une extrémité de la tige fonctionnelle (2) et le corps principal (1) l'un à l'autre ; et
une partie de capteur (9), pour envoyer des ondes ultrasonores à la douve afin de mesurer une épaisseur de la douve et recevoir des ondes ultrasonores réfléchies, installée sur un côté de la partie de liaison (5) et adaptée pour se déplacer par une rotation de la partie de liaison dans une direction sensiblement perpendiculaire à une direction d'insertion de la tige fonctionnelle (2), lorsque la tige fonctionnelle (2) se déplace linéairement vis-à-vis du corps principal (1).

2. Dispositif (10) de mesure d'épaisseur de douve (100) selon la revendication 1, dans lequel l'autre extrémité du corps principal (1) est raccordée à un tube de raccordement (4), et la tige fonctionnelle (2) pénètre à travers le tube de raccordement (4) de telle sorte que l'autre extrémité de la tige fonctionnelle (2) s'étende au-delà de l'extérieur du tube de raccordement (4).

3. Dispositif (10) de mesure d'épaisseur de douve selon la revendication 1, dans lequel la partie de liaison (5) comprend :
une première liaison (6) ayant une extrémité raccordée en rotation à l'extrémité de la tige fonctionnelle (2), et ayant un trou allongé (6a) incliné vis-à-vis d'une direction longitudinale, la première liaison (6) étant raccordée au corps principal (1) via une broche de raccordement (3a) insérée dans le trou allongé (6a) ; et
une deuxième liaison (7) ayant une extrémité raccordée à l'autre extrémité de la première liaison (6), et munie de la partie de capteur (9) montée sur celle-ci.

4. Dispositif (10) de mesure d'épaisseur de douve selon la revendication 3, comprenant en outre une troisième liaison (8) raccordant l'autre extrémité de la deuxième liaison (7) et l'extrémité de la tige fonctionnelle (2) l'une à l'autre.

5. Dispositif (10) de mesure d'épaisseur de douve selon la revendication 1, dans lequel le corps principal (1) est muni d'au moins une jambe de support (11) installée sur celui-ci, l'au moins une jambe de support (11) étant capable d'être dépliée latéralement du corps principal (1).

6. Dispositif (10) de mesure d'épaisseur de douve selon la revendication 5, dans lequel le corps principal (1) est muni d'au moins une rainure de découpe (1a) disposée dans une surface de côté de celui-ci, l'au moins une rainure de découpe (1a) permettant de déplier la jambe de support (11), et la tige fonctionnelle (2) est munie d'un bloc de dilatation (12) permettant de déplier la jambe de support (11), le bloc de dilatation (12) étant fixé à la tige fonctionnelle (2).

7. Dispositif (10) de mesure d'épaisseur de douve selon la revendication 6, dans lequel une extrémité de la jambe de support (11) est fixée au corps principal (1), et la jambe de support (11) est formée d'un matériau ayant une élasticité pour être déformé de manière flexible.

8. Dispositif (10) de mesure d'épaisseur de douve selon la revendication 6, dans lequel une extrémité de la jambe de support (11) est raccordée en rotation au corps principal (1) par le biais d'un arbre de rotation, et la jambe de support (11) est formée d'un métal et le bloc de dilatation (12) est formé d'un matériau magnétique.

9. Dispositif (10) de mesure d'épaisseur de douve selon la revendication 6, dans lequel une extrémité de la jambe de support (11) est raccordée en rotation au corps principal (1) par le biais d'un arbre de rotation, et l'autre extrémité de la jambe de support (11) est raccordée au corps principal (1) ou au tube de raccordement (4) par un maillon élastique.

10. Dispositif (10) de mesure d'épaisseur de douve selon la revendication 5, dans lequel le corps principal (1) est muni d'au moins une rainure de découpe (1a) disposée dans une surface de côté de celui-ci, l'au moins une rainure de découpe (1a) permettant de déplier la jambe de support (21),
la jambe de support (21) a une portion intermédiaire installée en rotation sur le corps principal (1) par une boulon de rotation (22), et a une extrémité raccordée au corps principal (1) via un ressort (23), et
l'extrémité de la jambe de support (21) est raccordée à une extrémité d'un fil métallique (24), et le fil métallique passe à travers un espace entre la tige fonctionnelle (2) et le tube de raccordement (4) de telle sorte que son autre extrémité s'étende au-delà de l'extérieur du tube de raccordement (4).

11. Dispositif (10) de mesure d'épaisseur de douve selon l'une quelconque des revendications 5 à 10, dans lequel l'autre extrémité de la jambe de support (21) est munie d'un maillon rotatif (13) installé sur celle-ci.

12. Dispositif (10) de mesure d'épaisseur de douve selon l'une quelconque des revendications 5 à 10, dans lequel, lorsque la jambe de support (21) est prévue sous la forme d'une paire de jambes de support (21), l'une des jambes de support (21) est plus longue que l'autre jambe de support (21).

13. Dispositif (10) de mesure d'épaisseur de douve selon la revendication 2, dans lequel le tube de raccordement (4) ou le corps principal (1) est muni d'au moins une jambe de support (31) en extension dans une direction latérale du tube de raccordement (4) ou du corps principal (1).

14. Dispositif (10) de mesure d'épaisseur de douve selon la revendication 13, dans lequel la jambe de support (31) a l'un parmi un type de bobine métallique, un type de balai plastique, et un type de pad en silicone.
